# EUROPEAN PATENT SPECIFICATION

(11) **EP 3 351 593 B1**
(45) Date of publication and mention of the grant of the patent: **27.10.2021**
(21) Application number: 16846555.7
(22) Date of filing: 15.09.2016
(51) Int. Cl.: C08L 75/00, C08G 18/38, C08K 5/3467, G02B 1/04, C08G 18/75, C08J 3/20, C08J 3/22, C08G 18/76, C08G 18/24

(54) **METHOD FOR MANUFACTURING POLYMERIZABLE COMPOSITION FOR OPTICAL MATERIAL, AND METHOD FOR MANUFACTURING OPTICAL MATERIAL**
VERFAHREN ZUR HERSTELLUNG EINER POLYMERISIERBAREN ZUSAMMENSETZUNG FÜR OPTISCHES MATERIAL UND VERFAHREN ZUR HERSTELLUNG VON OPTISCHEM MATERIAL
PROCÉDÉ DE PRÉPARATION D'UNE COMPOSITION POLYMÉRISABLE POUR MATÉRIAU OPTIQUE, ET PROCÉDÉ DE PRODUCTION DUDIT MATÉRIAU OPTIQUE

(30) Priority: 16.09.2015 JP 2015183425
(43) Date of publication of application: 25.07.2018
(73) Proprietor: Mitsui Chemicals, Inc., Minato-ku Tokyo 105-7122 (JP)
(72) Inventor: KAKINUMA, Naoyuki, Sodegaura-shi Chiba 299-0265 (JP); SUESUGI, Koji, Omuta-shi Fukuoka 836-8610 (JP)
(74) Representative: Mewburn Ellis LLP
(86) International application number: PCT/JP2016/077230
(87) International publication number: WO 2017/047684

(56) References cited:
- WO-A1-2015/037627
- WO-A1-2015/037627
- WO-A1-2015/037628
- WO-A1-2015/037628
- JP-A- H09 133 801
- JP-A- 2007 009 102
- JP-A- 2012 219 127
- JP-A- 2015 040 219

## Description

### TECHNICAL FIELD

The present invention relates to a method of manufacturing a polymerizable composition for an optical material and a method of manufacturing an optical material.

### BACKGROUND ART

Plastic lenses are lighter and harder to be broken than inorganic lenses, and thus are rapidly spreading as optical materials such as spectacle lenses and camera lenses, recently.

Here, recently, with respect to an optical material such as a spectacle lens, in order to reduce visual fatigue and the like by clarifying the contours and colors of objects, it is desired to improve the contrast of an object visually recognized through the lens.

In order to improve the contrast, it is necessary to selectively shield (cut) the wavelength band which is likely to cause glare as much as possible. For example, a neodymium compound can highly selectively absorb visible light near 585 nm, and it is known that a spectacle lens including an organic coloring matter such as a neodymium compound or a tetraazaporphyrin compound has improved contrast. The reason that a rare earth metal compound such as a neodymium compound can improve the contrast of an object is that the peak shape of the absorption spectrum in an absorption wavelength band in a visible light region is extremely sharp, that is, the absorption wavelength range is narrow and wavelength selectivity is high. As this wavelength selectivity is high, it is possible to obtain an effect of having a large transmittance in a wavelength band that is necessary for visibility and selectively absorbing a wavelength band that adversely affects glare.

In the same manner as the neodymium compound, the tetraazaporphyrin compound can provide excellent antiglare performances and improved contrast to a spectacle lens. That is, since the light transmittance at other than around 585 nm is good and a bright field of vision can be secured due to the sharpness of the peak at a specific absorption wavelength, it is possible to provide a spectacle lens with an extremely good balance between antiglare performances and visibility (contrast performance).

With respect to the case where an organic coloring matter such as a tetraazaporphyrin compound is used, a method of previously dissolving an organic coloring matter in a monomer composition and then performing polymerization to obtain a lens is disclosed in Examples of Patent Document 1.

Specifically, Patent Document 1 discloses an aspect in which an organic coloring matter for improving a contrast performance is directly dissolved in a total amount of bis(isocyanatemethyl) bicyclo- [2.2.1] -heptane as a raw material, various raw materials such as a polythiol compound and an ultraviolet absorbing agent were added, and polymerization was performed, so as to form a lens material. In this case, since the organic coloring matter and the ultraviolet absorbing agent are not necessarily sufficiently soluble with respect to various compounds, it is not easy to check the dispersion and dissolution of these materials in the polymerizable composition, in some cases. In a case where these materials are not dissolved in the polymerizable composition, the function of these materials may be deteriorated.

In Examples 4 to 6 of Patent Document 2, it is disclosed that m-xylylene diisocyanate, a predetermined ultraviolet absorbing agent, and a predetermined tetraazaporphyrin coloring matter were mixed under stirring, and 4-mercaptomethyl-3,6-dithia-1,8-octanedithiol was added and was mixed under stirring, so as to prepare a polymerizable composition. In paragraph 0012 of Patent Document 3, it is disclosed that, since isocyanate is highly reactive and thus there is a concern that isocyanate may react with a dye, a master batch is prepared by using a polythiol compound. In the example of Patent Document 4, it is disclosed that a master batch of a bluing agent was prepared by using a polythiol compound. That is, it is preferable to add additives such as an organic coloring matter and an ultraviolet absorbing agent to the isocyanate compound having excellent solubility, but there was a problem such as deterioration of functions due to reaction with isocyanate.

In the related art, adverse effects due to exposure of the eye to ultraviolet rays are regarded as problems. Recently, the influence on the eyes such as feeling fatigue and pain of the eyes due to blue light included in light emitted from natural light, a liquid crystal display of office equipment, and a display of a mobile device such as a smart phone or a mobile phone has been a problem, and thus it is desired to reduce the amount of exposure of the eye from ultraviolet rays to blue light having a relatively short wavelength of about 420 nm.

That is, another function provided to the plastic lens is an ultraviolet cutting function. In recent years, a plastic lens having a function of cutting ultraviolet (UV) rays has been developed.

Here, the influence of blue light having a short wavelength of about 420 nm on the eyes is disclosed in Non-Patent Document 1.

In this document, damage to retinal nerve cells (cultured retinal nerve R28 cells of a rat) by irradiation with blue LED lights having different peak wavelengths of 411 nm and 470 nm is verified. As a result, it is presented that, irradiation with blue light having a peak wavelength of 411 nm (4.5 W/m²) causes cell death of retinal nerve cells within 24 hours, while, with blue light having a peak wavelength of 470 nm, cells were not changed even in the same amount of irradiation, and it is presented that, suppression of exposure of light having a wavelength of 400 to 420 nm is important for prevention of ocular disorders.

For a long period of time, there is a concern that, exposure of the eyes to blue light causes fatigue of the eyes or stress, and it is considered that, exposure of the eyes to blue light causes age-related macular degeneration.

### RELATED DOCUMENT

### PATENT DOCUMENT

[Patent Document 1] Japanese Unexamined Patent Publication No. 2008-134618
[Patent Document 2] Japanese Unexamined Patent Publication No. 2012-173704
[Patent Document 3] Japanese Unexamined Patent Publication No. H09-133801
[Patent Document 4] Japanese Unexamined Patent Publication No. 2005-23294

[Non-Patent Document 1] The European journal of neuroscience, vol. 34, Iss. 4, 548 to 558, (2011)

### SUMMARY OF THE INVENTION

### TECHNICAL PROBLEM

That is, in this technical field, development of an optical material having an excellent effect of blocking blue light, having an excellent balance between antiglare characteristics and visibility (contrast performance), being colorless transparent, and having excellent external appearance is strongly desired, and development of a method of stably manufacturing a polymerizable composition capable of realizing such optical material is also desired. In view of the above circumstances, an object of the present invention is to provide a method of stably manufacturing a polymerizable composition that can realize an optical material having an excellent effect of blocking blue light, having an excellent balance between antiglare characteristics and visibility (contrast performance), being colorless transparent, and having excellent external appearance.

### SOLUTION TO PROBLEM

The present inventors have found that, it is easy to check whether the organic coloring matter is uniformly dissolved by employing a step of preliminarily mixing a portion of an iso(thio)cyanate compound with an organic coloring matter, and as a result, an organic coloring matter and an ultraviolet absorbing agent can be uniformly dissolved in the polymerizable composition. That is, the present inventors have found that it is possible to obtain an optical material capable of exhibiting the desired function of these materials with the polymerizable composition obtained from the manufacturing method including this process. The present inventors have found that it is possible to effectively improve an effect of blocking blue light by combining a specific resin component with an ultraviolet absorbing agent.

That is, the present invention can be provided below.
[1] A method of manufacturing a polymerizable composition for an optical material, including: a step of mixing an iso (thio) cyanate compound (A1) and an organic coloring matter (B) to obtain a mixed solution a;
   a step of mixing the mixed solution a, an ultraviolet absorbing agent (D), and an iso (thio) cyanate compound (A2) which is identical to or different from the iso(thio)cyanate compound (A1) to obtain a mixed solution b; and
   a step of mixing the mixed solution b and an active hydrogen compound (C) tetraazaporphyrin compound is represented by Formula (1a), <, wherein the organic coloring matter (B) is a> 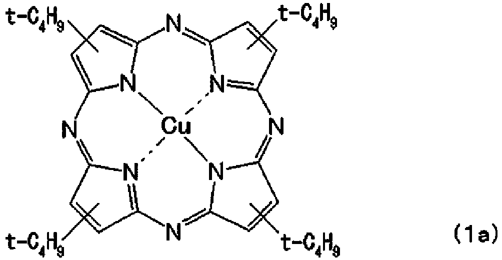
   in Formula (1a), Cu represents divalent copper, t-C₄H₉ represents a tertiary-butyl group
**[2]** The method of manufacturing a polymerizable composition for an optical material according to [1], in which the active hydrogen compound (C) is a polythiol compound.
**[3]** The method of manufacturing a polymerizable composition for an optical material according to [2], in which the polythiol compound includes one or more compounds selected from the group consisting of pentaerythritol tetrakis(2-mercaptoacetate), pentaerythritol tetrakis(3-mercaptopropionate), bis(2-mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio) propane, 4,6-bis(mercaptomethylthio)-1,3-dithiane, 2-(2,2-bis(mercaptomethylthio)ethyl)-1,3-dithietane, and ethylene glycol bis(3-mercaptopropionate).
[4] The method of manufacturing a polymerizable composition for an optical material according to any one of [1] to [3], in which the iso (thio) cyanate compound (A1) or the iso (thio) cyanate compound (A2) includes a compound selected from the group consisting of an aliphatic polyisocyanate compound, an alicyclic polyisocyanate compound, an aromatic polyisocyanate compound, a heterocyclic polyisocyanate compound, an aliphatic polyisothiocyanate compound, an alicyclic polyisothiocyanate compound, an aromatic polyisothiocyanate compound, and a sulfur-containing heterocyclic polyisothiocyanate compound or derivatives thereof.
[5] The method of manufacturing a polymerizable composition for an optical material according to any one of [1] to [4], in which the ultraviolet absorbing agent (D) includes one or more compounds selected from the group consisting of a benzophenone-based compound, a triazine-based compound, and a benzotriazole-based compound.
[6] A method of manufacturing an optical material, including: a step of heating and curing a polymerizable composition for an optical material obtained by the manufacturing method according to any one of [1] to [5].

### ADVANTAGEOUS EFFECTS OF INVENTION

The manufacturing method of the present invention includes a step of preliminarily mixing a portion of an iso(thio)cyanate compound with an organic coloring matter so as to cause an organic coloring matter to be uniformly dissolved in the iso(thio)cyanate compound and also includes a step of adding and mixing the rest of the iso(thio)cyanate compound and an ultraviolet absorbing agent so as to cause the organic coloring matter and the ultraviolet absorbing agent to be sufficiently dissolved in the polymerizable composition. Therefore, it is possible to stably obtain an optical material capable of exhibiting the desired function of these materials with the polymerizable composition obtained from the manufacturing method including this process. That is, according to the manufacturing method of the present invention, it is possible to stably obtain the polymerizable composition for an optical material that can provide an optical material having an excellent effect of blocking blue light of about 400 to 420 nm from harmful ultraviolet rays and an excellent balance between antiglare characteristics and visibility (contrast performance). It is possible to effectively improve an effect of blocking blue light by combining a specific resin component with an ultraviolet absorbing agent.

An optical material formed of a polymerizable composition obtained by such a method is colorless and transparent and has excellent external appearance, together with reducing an influence of harmful light on the eyes and suppressing a disorder such as fatigue of the eyes and stress, and thus the optical material can be suitably used as a plastic spectacle lens, particularly.

### BRIEF DESCRIPTION OF THE DRAWINGS

The above objects, other objects, features, and advantages become more apparent from the preferable embodiments described below and the accompanying drawings.

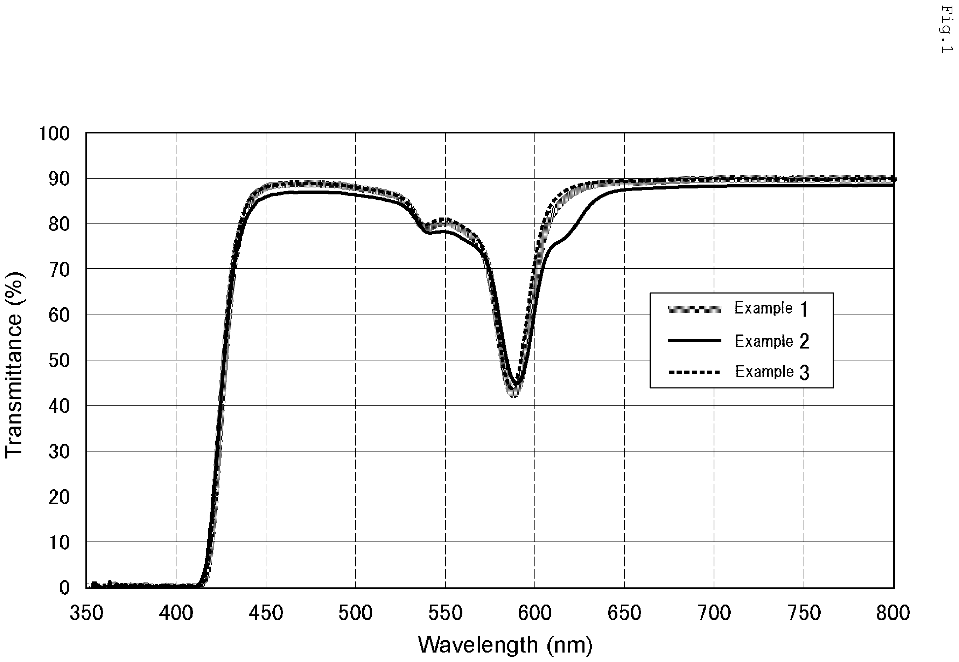

FIG. 1 is a spectrum chart obtained in a case where light transmittance is measured with respect to a molded product obtained in a section of "Examples".

### DESCRIPTION OF EMBODIMENTS

Hereinafter, the present invention is described in detail based on preferable embodiments.

In the present specification, the expression "to" means "equal to or less and equal to or greater than" unless described otherwise.

### [Method of manufacturing polymerizable composition for optical material]

First, a manufacturing method according to the present embodiment is described.

The method of manufacturing the polymerizable composition for an optical material of the present embodiment includes Steps 1 to 3.
Step 1: Mixing an iso (thio) cyanate compound (A1) and an organic coloring matter (B), so as to obtain a mixed solution a.
Step 2: Mixing the mixed solution a, an ultraviolet absorbing agent (D), and an iso(thio)cyanate compound (A2) which is identical to or different from the iso(thio)cyanate compound (A1), so as to obtain a mixed solution b.
Step 3: Mixing the mixed solution b and an active hydrogen compound (C).

That is, the polymerizable composition for an optical material that can be obtained by the manufacturing method of the present embodiment includes an iso(thio)cyanate compound (A) including the iso (thio) cyanate compounds (A1) and (A2), an organic coloring matter (B), the active hydrogen compound (C), and the ultraviolet absorbing agent (D). Hereinafter, the respective components used in the present embodiment are described in detail.

### (Iso(thio)cyanate compound (A))

The iso (thio) cyanate compound (A) includes the iso (thio) cyanate compounds (A1) and (A2). The iso(thio)cyanate compounds (A1) and (A2) are compounds having two or more iso(thio)cyanate groups and may be identical to or different from each other.

Examples of the iso(thio)cyanate compound includes a compound selected from the group consisting of an aliphatic polyisocyanate compound, an alicyclic polyisocyanate compound, an aromatic polyisocyanate compound, a heterocyclic polyisocyanate compound, an aliphatic polyisothiocyanate compound, an alicyclic polyisothiocyanate compound, an aromatic polyisothiocyanate compound, and a sulfur-containing heterocyclic polyisothiocyanate compound or derivatives thereof.

Specific examples thereof include an aliphatic polyisocyanate compound such as pentamethylene diisocyanate, hexamethylene diisocyanate, 2,2,4-trimethylhexane diisocyanate, 2,4,4-trimethylhexamethylene diisocyanate, lysine diisocyanatomethyl ester, lysine triisocyanate, m-xylylene diisocyanate, p-xylene diisocyanate, *α*,*α*,*α*',*α*'-tetramethylxylylene diisocyanate, bis(isocyanatomethyl) naphthalene, mesitylene triisocyanate, bis(isocyanatomethyl) sulfide, bis(isocyanatoethyl) sulfide, bis(isocyanatomethyl) disulfide, bis(isocyanatoethyl) disulfide, bis(isocyanatomethylthio) methane, bis(isocyanatoethylthio) methane, bis(isocyanatoethylthio) ethane, and bis(isocyanatomethylthio) ethane;
an alicyclic polyisocyanate compound such as isophorone diisocyanate, bis(isocyanatomethyl) cyclohexane, dicyclohexylmethane-4,4'-diisocyanate, cyclohexane diisocyanate, methyl cyclohexane diisocyanate, dicyclohexyl dimethyl methane isocyanate, 2,5-bis(isocyanatomethyl) bicyclo-[2.2.1]-heptane, 2,6-bis(isocyanatomethyl) bicyclo-[2.2.1]-heptane, 3,8-bis(isocyanatomethyl) tricyclodecane, 3,9-bis(isocyanatomethyl) tricyclodecane, 4,8-bis(isocyanatomethyl) tricyclodecane, and 4,9-bis(isocyanatomethyl) tricyclodecane;
an aromatic polyisocyanate compound such as 1,3-phenylene diisocyanate, 1,4-phenylene diisocyanate, 2,4-tolylene diisocyanate, 2,6-tolylene diisocyanate, 4,4'-diphenylmethane diisocyanate, and diphenylsulfide-4,4-diisocyanate; and
a heterocyclic polyisocyanate compound such as 2,5-diisocyanatothiophene, 2,5-bis(isocyanatomethyl) thiophene, 2,5-diisocyanatotetrahydrothiophene, 2,5-bis(isocyanatomethyl) tetrahydrothiophene, 3,4-bis(isocyanatomethyl) tetrahydrothiophene, 2,5-diisocyanato-1,4-dithiane, 2,5-bis(isocyanatomethyl)-1,4-dithiane, 4,5-diisocyanato-1,3-dithiolane, and 4,5-bis(isocyanatomethyl)-1,3-dithiolane. As the iso(thio)cyanate compounds (A1) and (A2), one or more selected from these can be used in combination.

A halogen substituted compound such as a bromine substitute and a chlorine substitute of these, an alkyl substitute, an alkoxy substitute, a nitro substitute, a prepolymer type modified product with polyhydric alcohol, a carbodiimide modified product, a urea modified product, a burette modified product, a dimerization or trimerization reaction product, and the like can be used.

Examples of the isothiocyanate compound include an aliphatic polyisothiocyanate compound such as hexamethylene diisothiocyanate, lysine diisothiocyanate methyl ester, lysine triisothiocyanate, m-xylylene diisothiocyanate, bis(isothiocyanatomethyl) sulfide, bis(isothiocyanatoethyl) sulfide, and bis(isothiocyanatoethyl) disulfide;
an alicyclic polyisothiocyanate compound such as isophorone diisothiocyanate, bis(isothiocyanatomethyl) cyclohexane, dicyclohexylmethane diisothiocyanate, cyclohexane diisothiocyanate, methyl cyclohexane diisothiocyanate, 2,5-bis(isothiocyanatomethyl) bicyclo-[2.2.1]-heptane, 2,6-bis(isothiocyanatomethyl) bicyclo-[2.2.1]-heptane, 3,8-bis(isothiocyanatomethyl) tricyclodecane, 3,9-bis(isothiocyanatomethyl) tricyclodecane, 4,8-bis(isothiocyanatomethyl) tricyclodecane, and 4,9-bis(isothiocyanatomethyl) tricyclodecane;
an aromatic polyisothiocyanate compound such as tolylene diisothiocyanate, 4,4-diphenylmethane diisothiocyanate, and diphenyl disulfide-4,4-diisothiocyanate; and
a sulfur-containing heterocyclic polyisothiocyanate compound such as 2,5-diisothiocyanatothiophene, 2,5-bis(isothiocyanatomethyl) thiophene, 2,5-isothiocyanatotetrahydrothiophene, 2,5-bis(isothiocyanatomethyl) tetrahydrothiophene, 3,4-bis(isothiocyanatomethyl) tetrahydrothiophene, 2,5-diisothiocyanato-1,4-dithiane, 2,5-bis(isothiocyanatomethyl)-1,4-dithiane, 4,5-diisothiocyanato-1,3-dithiolane, and 4,5-bis(isothiocyanatomethyl)-1,3-dithiolane. As the iso(thio)cyanate compounds (A1) and (A2), one or more selected from these can be used in combination.

A halogen substituted compound such as a bromine substitute and a chlorine substitute of these, an alkyl substitute, an alkoxy substitute, a nitro substitute, a prepolymer type modified product with polyhydric alcohol, a carbodiimide modified product, a urea modified product, a burette modified product, a dimerization or trimerization reaction product, and the like can be used.

According to the present embodiment, as the iso(thio)cyanate compounds (A1) and (A2), at least one selected from 2,5-bis(isocyanatomethyl) bicyclo-[2.2.1]-heptane, 2,6-bis(isocyanatomethyl) bicyclo-[2.2.1]-heptane, m-xylylene diisocyanate, and bis(4-isocyanatocyclohexyl) methane is preferably used.

In the present embodiment, in a case where these iso (thio) cyanate compounds are used, the organic coloring matter (B) is dissolved in an iso (thio) cyanate compound having high solubility, and thus the organic coloring matter (B) can be uniformly dissolved in the polymerizable composition. As a result, it is possible to stably obtain an optical material capable of exhibiting the desired function of the organic coloring matter (B) with the polymerizable composition obtained from the manufacturing method including this process.

### (Organic coloring matter (B)) is

The organic coloring matter (B) that is used in the methods of the present case is a compound in which a main absorption peak (P) in the visible light absorption spectroscopy spectrum measured with a chloroform or toluene solution exists between 565 nm to 605 nm, a light absorption coefficient (ml/g•cm) of a peak apex (Pmax: a point indicating a maximum light absorption coefficient in a peak) of the peak (P) is equal to or greater than 0.5×10⁵, a peak width in an absorbance of 1/4 of the absorbance at (Pmax) of the peak (P) is equal to or less than 50 nm, a peak width in an absorbance of 1/2 of absorbance of (Pmax) of the peak (P) is equal to or less than 30 nm, and a peak width in an absorbance of 2/3 of an absorbance of (Pmax) of the peak (P) is in the range of equal to or less than 20 nm.

In the organic coloring matter (B), a peak apex (Pmax) of the main absorption peak (P) is between 580 nm to 590 nm. A peak width in an absorbance of 1/4 of the absorbance of the peak apex (Pmax) of the main absorption peak (P) is equal to or less than 40 nm, a peak width in an absorbance of 1/2 of an absorbance of the peak apex (Pmax) of the main absorption peak (P) is equal to or less than 25 nm, and a peak width at an absorbance of 2/3 of the absorbance of the peak apex (Pmax) of the main absorption peak (P) is equal to or less than 20 nm.

The organic coloring matter (B) is a tetraazaporphyrin compound represented by Formula (1a), and this corresponds to a model name of PD-311S (manufactured by Mitsui Chemicals, Inc.).

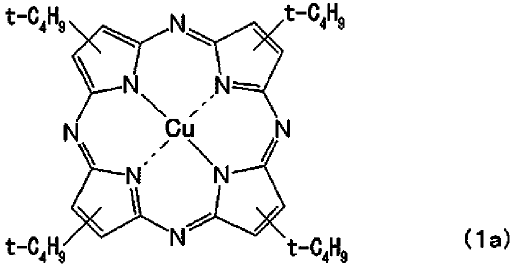

In Formula (1a), Cu represents divalent copper, t-C₄H₉ represents a tertiary-butyl group .

### (Active hydrogen compound (C))

Examples of the active hydrogen compound (C) include a polyol compound and a polythiol compound. The polyol compound is one or more kinds of aliphatic or alicyclic alcohol, and specific examples thereof include linear or branched aliphatic alcohol, alicyclic alcohol, and alcohol obtained by adding these alcohols and ethylene oxide, propylene oxide, and ε-caprolactone.

Examples of the linear or branched aliphatic alcohol include ethylene glycol, diethylene glycol, triethylene glycol, propylene glycol, dipropylene glycol, tripropylene glycol, 1,3-propanediol, 2,2-dimethyl-1,3-propanediol, 2,2-diethyl-1,3-propanediol, 1,2-butanediol, 1,3-butanediol, 1,4-butanediol, 3-methyl-1,3-butanediol, 1,2-pentanediol, 1,3-pentanediol, 1,5-pentanediol, 2,4-pentanediol, 2-methyl-2,4-pentanediol, 3-methyl-1,5-pentanediol, 1,6-hexanediol, 2,5-hexanediol, glycerol, diglycerol, polyglycerol, trimethylolpropane, pentaerythritol, and di(trimethylolpropane) .

Examples of the alicyclic alcohol include 1,2-cyclopentanediol, 1,3-cyclopentanediol, 3-methyl-1,2-cyclopentanediol, 1,2-cyclohexanediol, 1,3-cyclohexanediol, 1,4-cyclohexanediol, 4,4'-bicyclohexanol, and 1,4-cyclohexanedimethanol.

The alicyclic alcohol may be a compound obtained by adding these alcohols and ethylene oxide, propylene oxide, and ε-caprolactone. Examples thereof include an ethylene oxide adduct of glycerol, an ethylene oxide adduct of trimethylolpropane, an ethylene oxide adduct of pentaerythritol, a propylene oxide adduct of glycerol, a propylene oxide adduct of trimethylolpropane, a propylene oxide adduct of pentaerythritol, caprolactone modified glycerol, caprolactone-modified trimethylolpropane, and caprolactone-modified pentaerythritol.

In the present embodiment, as the active hydrogen compound (C), a polythiol compound can be preferably used.

Examples of the polythiol compound include an aliphatic polythiol compound such as methanedithiol, 1,2-ethanedithiol, 1,2,3-propanetrithiol, 1,2-cyclohexanedithiol, bis(2-mercaptoethyl) ether, tetrakis(mercaptomethyl) methane, diethylene glycol bis(2-mercaptoacetate), diethylene glycol bis(3-mercaptopropionate), ethylene glycol bis(2-mercaptoacetate), ethylene glycol bis(3-mercaptopropionate), trimethylolpropane tris(2-mercaptoacetate), trimethylolpropane tris(3-mercaptopropionate), trimethylol ethane tris(2-mercaptoacetate), trimethylol ethane tris(3-mercaptopropionate), pentaerythritol tetrakis(2-mercaptoacetate), pentaerythritol tetrakis(3-mercaptopropionate), bis(mercaptomethyl) sulfide, bis(mercaptomethyl) disulfide, bis(mercaptoethyl) sulfide, bis(mercaptoethyl) disulfide, bis(mercaptopropyl) sulfide, bis(mercaptomethylthio) methane, bis(2-mercaptoethylthio) methane, bis(3-mercaptopropylthio) methane, 1,2-bis(mercaptomethylthio) ethane, 1,2-bis(2-mercaptoethylthio) ethane, 1,2-bis(3-mercaptopropylthio) ethane, 1,2,3-tris(mercaptomethylthio) propane, 1,2,3-tris(2-mercaptoethylthio) propane, 1,2,3-tris(3-mercaptopropylthio) propane, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, tetrakis(mercaptomethylthiomethyl) methane, tetrakis(2-mercaptoethylthiomethyl) methane, tetrakis(3-mercaptopropylthiomethyl) methane, bis(2,3-dimercaptopropyl) sulfide, 2,5-dimercaptomethyl-1,4-dithiane, 2,5-dimercapto-1,4-dithiane, 2,5-dimercaptomethyl-2,5-dimethyl-1,4-dithiane, an ester of these thioglycolic acid and mercaptopropionic acid, hydroxymethyl sulfide bis(2-mercaptoacetate), hydroxymethyl sulfide bis(3-mercaptopropionate), hydroxyethyl sulfide bis(2-mercaptoacetate), hydroxyethyl sulfide bis(3-mercaptopropionate), hydroxymethyl disulfide bis(2-mercaptoacetate), hydroxymethyl disulfide bis(3-mercaptopropionate), hydroxyethyl disulfide bis(2-mercaptoacetate), hydroxyethyl disulfide bis(3-mercaptopropinate), 2-mercaptoethyl ether bis(2-mercaptoacetate), 2-mercaptoethyl ether bis(3-mercaptopropionate), thiodiglycolic acid bis(2-mercaptoethyl ester), thiodipropionic acid bis(2-mercaptoethyl ester), dithiodiglycolic acid bis(2-mercaptoethyl ester), dithiodipropionic acid bis(2-mercaptoethyl ester), 1,1,3,3-tetrakis(mercaptomethylthio) propane, 1,1,2,2-tetrakis(mercaptomethylthio) ethane, 4,6-bis(mercaptomethylthio)-1,3-dithiane, tris(mercaptomethylthio) methane, and tris(mercaptoethylthio) methane;
an aromatic polythiol compound such as 1,2-dimercaptobenzene, 1,3-dimercaptobenzene, 1,4-dimercaptobenzene, 1,2-bis(mercaptomethyl) benzene, 1,3-bis(mercaptomethyl) benzene, 1,4-bis(mercaptomethyl) benzene, 1,2-bis(mercaptoethyl) benzene, 1,3-bis(mercaptoethyl) benzene, 1,4-bis(mercaptoethyl) benzene, 1,3,5-trimercaptobenzene, 1,3,5-tris(mercaptomethyl) benzene, 1,3,5-tris(mercaptomethyleneoxy) benzene, 1,3,5-tris(mercaptoethyleneoxy) benzene, 2,5-toluenedithiol, 3,4-toluenedithiol, 1,5-naphthalene dithiol, and 2,6-naphthalenedithiol; and
a heterocyclic polythiol compound such as 2-methylamino-4,6-dithiol-sym-triazine, 3,4-thiophenedithiol, bismuthiol, 4,6-bis(mercaptomethylthio)-1,3-dithiane, and 2-(2,2-bis(mercaptomethylthio)ethyl)-1,3-dithietane.

In view of the effect of the present invention, as the polythiol compound that can be used in the present embodiment, one or more compounds selected from the group consisting of pentaerythritol tetrakis(2-mercaptoacetate), pentaerythritol tetrakis(3-mercaptopropionate), bis(2-mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio) propane, 4,6-bis(mercaptomethylthio)-1,3-dithiane, 2-(2,2-bis(mercaptomethylthio) ethyl)-1,3-dithietane, and ethylene glycol bis(3-mercaptopropionate) are more preferably used, and one or more compounds selected from the group consisting of pentaerythritol tetrakis(3-mercaptopropionate), 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane are particularly preferably used.

### (Ultraviolet absorbing agent (D))

The ultraviolet absorbing agent (D) used in the present embodiment may be appropriately selected from the well-known ultraviolet absorbing agents, but, for example, an absorbing agent having a maximum absorption wavelength of 340 nm to 360 nm in a case of being dissolved in a chloroform solution is preferable.

Examples of the ultraviolet absorbing agent (D) include a benzophenone-based compound, a triazine-based compound, and a benzotriazole-based compound.

Examples of the benzophenone-based compound include 2,2'-dihydroxy-4,4'-dimethoxybenzophenone, and 2,2'-4,4'-tetrahydroxybenzophenone.

Examples of the triazine compound include ADEKASTAB LA-F70 manufactured by ADEKA Corporation and TINUVIN 400 manufactured by BASF SE.

In the present embodiment, it is preferable to use a benzotriazole-based compound, and examples of the benzotriazole-based compound include an alkyl-substituted benzotriazole-based compound, a linear alkylester-substituted benzotriazole-based compound, and a chloro-substituted benzotriazole-based compound.

Examples of the alkyl-substituted benzotriazole-based compound include 2-(2H-benzotriazole-2-yl)-4-tert-octylphenol, and examples of commercially available products include Viosorb 583 manufactured by Kyodo Chemical Co., Ltd. and SEESEORB 709 manufactured by Shipro Kasei Kaisha, Ltd.

Examples of the linear alkyl ester-substituted benzotriazole-based compound include a mixture of octyl 3-[3-tert-butyl-5-(5-chloro-2H-benzotriazole-2-yl)-4-hydroxyphen yl] propionate and 2-ethylhexyl 3-[3-tert-butyl-5-(5-chloro-2H-benzotriazole-2-yl)-4-hydroxyphen yl] propionate, and examples of commercially available products include EVERSORB 109 manufactured by Everlight Chemical Industrial Corp..

Examples of a chlorosubstituted benzotriazole compound include 2-(2-hydroxy-3-t-butyl-5-methylphenyl)-chlorobenzotriazole, and examples of commercially available products include TINUVIN 326 manufactured by BASF SE, SEESEORB 703 manufactured by Shipro Kasei Kaisha, Ltd., Viosorb 550 manufactured by Kyodo Chemical Co., Ltd., and KEMISORB 73 manufactured by Chemipro Kasei Kaisha, Ltd. In a case where the ultraviolet absorbing agent (D) is a compound having a maximum absorption wavelength in a case of being dissolved in a chloroform solution is 340 nm to 360 nm, it is possible to effectively obtain an optical material having an excellent effect of blocking blue light of 400 to 420 nm from harmful ultraviolet rays, being colorless and transparent, and having an excellent external appearance.

According to the present embodiment, it is preferable to use one or more of these ultraviolet absorbing agents as the ultraviolet absorbing agent (D), and two or more different kinds of the ultraviolet absorbing agents (D) may be contained. It is preferable that the maximum absorption peaks of all of the ultraviolet absorbing agents forming the ultraviolet absorbing agent (D) are also in the range of 340 nm to 360 nm.

Specifically, the polymerizable composition for an optical material of the present embodiment can be obtained in the following steps.

Step 1: Mixing an iso (thio) cyanate compound (A1) and an organic coloring matter (B), so as to obtain a mixed solution a.

Step 2: Mixing the mixed solution a, an ultraviolet absorbing agent (D), and an iso(thio)cyanate compound (A2) which is identical to or different from the iso(thio)cyanate compound (A1), so as to obtain a mixed solution b.

Step 3: Mixing the mixed solution b and an active hydrogen compound (C).

### (Step (1))

In Step 1, the organic coloring matter (B) is dissolved in the iso (thio) cyanate compound (A1), the mixed solution a (coloring matter solution) is prepared (this mixed solution a is also referred to as a "master batch" in the present specification). The present inventors have found that compatibility between the iso (thio) cyanate compound (A1) and the organic coloring matter (B) is high, the organic coloring matter (B) can be effectively dissolved in the iso (thio) cyanate compound (A1), and thus the mixed solution a having high uniformity can be obtained.

In the present embodiment, in a case where the specific iso(thio)cyanate compound (A1) and the organic coloring matter (B) are used, the organic coloring matter (B) can be dissolved in the iso(thio)cyanate compound (A1) having high solubility, and thus the organic coloring matter (B) can be uniformly dissolved in the polymerizable composition. As a result, it is possible to stably obtain an optical material capable of exhibiting the desired function of the organic coloring matter (B) with the polymerizable composition obtained from the manufacturing method including this process.

Here, according to the present embodiment, in Step 2, the iso(thio)cyanate compound (A2) is separately formulated. In other words, in Step 1, a total amount of the iso(thio)cyanate compound to be formulated to the polymerizable composition is not used.

In this case, handleability in a step of obtaining the mixed solution a is improved, or visibility with respect to the mixed solution a is rapidly improved. As a result, it becomes easy to check the solubility of the organic coloring matter (B). That is, according to the manufacturing method of the present embodiment, it is possible to a polymerizable resin composition which can improve the external appearance of the optical material and can obtain an optical material having excellent balance between antiglare characteristics and visibility (contrast performance).

An amount of the iso(thio)cyanate compound (A1) is a portion of the iso(thio)cyanate compound used in the polymerizable composition, but an amount of the iso (thio) cyanate compound (A1) is, for example, 0.05 parts by weight to 20.0 parts by weight, preferably 0.1 parts by weight to 10.0 parts by weight, more preferably 0.5 parts by weight to 5.0 parts by weight with respect to 100 parts by weight of a total amount of the iso(thio)cyanate compound to be formulated in the polymerizable composition.

In a case where the amount is set in this range, the handleability of the mixed solution a is improved, and the solubility of the organic coloring matter (B) is easily checked.

The mixing temperature in Step 1 is 10°C to 80°C and preferably 50°C to 70°C. The addition order and the addition rate are not particularly limited as long as the respective components can be uniformly mixed. In view of the above, the mixing time can be set as 30 to 600 minutes and preferably as 300 to 420 minutes. Conditions under atmospheric pressure can be employed, and conditions under pressure can also be employed.

### (Step (2))

In Step 2, the mixed solution an obtained in Step 1, the ultraviolet absorbing agent (D), and the iso(thio)cyanate compound (A2) which is identical to or different from the iso(thio)cyanate compound (A1) are mixed, so as to obtain the mixed solution b.

In Step 2, in order to separately add the ultraviolet absorbing agent (D) and the iso (thio) cyanate compound (A2) to the mixed solution a, it is possible to evenly dissolve the ultraviolet absorbing agent (D) in the polymerizable composition. As a result, an optical material that can exhibit a desired function (an effect of blocking blue light) of the ultraviolet absorbing agent (D) can be stably obtained with the polymerizable composition obtained from the manufacturing method including the corresponding step.

The mixing condition of Step 2 may be set appropriately according to the component to be added, but the same method as in Step 1 can be employed.

### (Step (3))

In Step 3, the mixed solution b obtained in Step 2 and an active hydrogen compound (C) are mixed.

After Step 2, in a case where the active hydrogen compound (C) is added, even in a case where dissolution residues of the organic coloring matter (B) and the ultraviolet absorbing agent (D) exist, these can be evenly dissolved in the polymerizable composition.

The mixing condition of Step 3 may be set appropriately according to the component to be added, but the same method as in Step 1 can be employed.

First, the formulation amount of the manufacturing method according to the present embodiment is described.

First, in the polymerizable composition, a ratio ((NCO group+NCS group)/(OH group+SH group)) of the total mol of the NCO group and the NCS group is generally in the range of 0.8 to 1.2, preferably in the range of 0.85 to 1.15, and even more preferably in the range of 0.9 to 1.1 with respect to the total mol of OH groups and SH groups in the active hydrogen compound (C) in the poly(thio)isocyanate compounds (A1)+(A2).

In a case where the ratio is in this range, it is possible to obtain a resin having excellent heat resistance, excellent moisture resistance, and excellent light fastness can be obtained, and is preferable as a resin material.

A sum of the amount of the poly(thio)isocyanate compounds ((A1)+(A2)) and the content of the active hydrogen compound (C) in the polymerizable composition is, for example, equal to or greater than 80 parts by weight, preferably equal to or greater than 90 parts by weight, and even more preferably equal to or greater than 95 parts by weight with respect to 100 parts by weight of the total amount of the polymerizable composition.

In view of exhibiting the desired effect, the content of the organic coloring matter (B) is 0.0001 to 0.1 parts by weight, preferably 0.0002 to 0.01 parts by weight, and more preferably 0.0005 to 0.005 parts by weight with respect to 100 parts by weight of the total amount of the polymerizable composition.

In view of exhibiting the desired effect, the content of the ultraviolet absorbing agent (D), for example, is 0.1 to 3.0 parts by weight, preferably 0.3 to 2.0 parts by weight, and more preferably 0.5 to 1.5 parts by weight with respect to 100 parts by weight of the polymerizable composition.

The polymerizable composition for an optical material of the present embodiment may further include a resin modifier, a catalyst, an internal release agent, a light stabilizer, and a bluing agent, and the like, as another component. In the polymerizable composition for an optical material, in addition to the ultraviolet absorbing agent (D), an ultraviolet absorbing agent in which a maximum absorption peak does not exist in the range of 340 nm to 360 nm may be included.

That is, a modifier may be added to the polymerizable composition of the present embodiment, for the purpose of adjusting various physical properties such as optical properties, impact resistance, and specific gravity of the obtained molded product and adjusting the handling properties of each component of the polymerizable composition, without deteriorating the effect of the present invention.

Examples of the resin modifier include an episulfide compound, an amine compound, an epoxy compound, an organic acid and an anhydride thereof, and an olefin compound including a (meth)acrylate compound and the like. A modifier that does not contain a hydroxyl group is preferable in view of occurrence of unevenness in a case of lens polymerization and dyeability.

Examples of the catalyst include Lewis acid, amine, organic acid, amine organic acid salt, and Lewis acid, amine, and amine organic acid salt are preferable, and dimethyl tin chloride, dibutyl tin chloride, and dibutyl tin laurate are more preferable. The adding amount is preferably 0.005 parts by weight to 0.5 parts by weight and more preferably 0.005 parts by weight to 0.3 parts by weight with respect to 100 parts by weight of the sum of amounts of the poly(thio)isocyanate compounds ((A1)+(A2)) and the active hydrogen compound (C).

As the internal release agent, an acidic phosphate ester can be used. Examples of the acidic phosphate ester include phosphoric acid monoester and phosphoric acid diester, and these may be used singly or two or more types thereof may be used in a mixture.

For example, ZelecUN manufactured by Stepan Company, an internal release agent for MR manufactured by Mitsui Chemicals, Inc., JP series manufactured by Johoku Chemical Co., Ltd., PHOSPHANOL series manufactured by Toho Chemical Industry Co., Ltd., and AP, DP Series manufactured by Daihachi Chemical Industry Co., Ltd. can be used.

As the light stabilizer, a hindered amine-based compound can be used. Examples of the commercially available products of the hindered amine-based compound include Lowilite76 and Lowilite92 manufactured by Chemtura Corporation, Tinuvin144, Tinuvin292, and Tinuvin765 manufactured by BASF SE, ADEKASTAB LA-52 and LA-72 manufactured by ADEKA Corporation, and JF-95 manufactured by Johoku Chemical Co., Ltd.

Examples of the bluing agent include a bluing agent having an absorption band in orange to yellow wavelength ranges in the visible light region and having a function of adjusting the hue of the optical material made of a resin. Specifically, the bluing agent includes a material exhibiting blue to purple colors.

In addition, according to the present embodiment, in order to form a polymerizable composition, depending on the purposes, in the same manner as the well-known forming method, various additives such as a chain extender, a crosslinking agent, an ultraviolet absorbing agent, an antioxidant, a coloring inhibitor, an oil soluble dye, a filler, and an adhesion improver may be added.

In an optical material obtained from the polymerizable composition for an optical material of the present embodiment obtained as described above, transparency is excellent, coloration is suppressed, and further a disorder such as fatigue of the eyes or stress can be suppressed. Particularly, in a case where light transmittance at 440 nm is equal to or greater than 80%, an optical material being colorless and transparent and having excellent external appearance can be obtained.

### [Optical material]

Subsequently, an optical material according to the present embodiment is described.

An optical material according to the present embodiment can be obtained by curing (for example, heat curing) the polymerizable composition for an optical material and causing the polymerizable composition to be a cured product.

According to the present embodiment, examples of the preferable method of manufacturing the optical material include cast polymerization. As an example of cast polymerization, a polymerizable composition is injected between molding molds held by a gasket, a tape or the like. In this case, depending on the physical properties required for the plastic lens to be obtained, in many cases, a defoaming treatment under reduced pressure, and a filtration treatment under pressurization, depressurization, and the like are preferably performed, if necessary.

The polymerization condition largely differs depending on the polymerizable composition, the kind and the use amount of the catalyst, the shape of the mold, and the like, and thus the polymerization condition is not limited. However, the polymerization is performed at the temperature of -50°C to 150°C and over 1 to 50 hours. It is preferable that the temperature is maintained or is gradually increased in a temperature range of 5°C to 150°C, so as to cure the polymerizable composition, but the temperature can be appropriately set.

The optical material of the present embodiment may be subjected to a treatment such as annealing, if necessary. With respect to the treatment temperature, the treatment is generally performed at 50°C to 150°C, preferably performed at 90°C to 140°C, and more preferably at 100°C to 130°C.

The polymerizable composition of the present embodiment may be obtained as optical materials in various shapes by changing the mold in a case of the cast polymerization. In a case where the optical material of the present embodiment is caused to have a desired shape, and includes a coating layer formed if necessary and other members, the optical material can be optical materials in various shapes.

An optical material that can be obtained by curing the polymerizable composition of the present embodiment includes a high refractive index and high transparency and can be used as an optical molded product such as a spectacle lens, a camera lens, a light emitting diode (LED), a prism, an optical fiber, an information recording substrate, a filter, and a light emitting diode. Particularly, it is suitable as an optical material for a lens such as a spectacle lens and a camera lens, light emitting diodes, and the like.

The optical material obtained by curing the polymerizable composition of the present embodiment can be used by providing a coating layer on one surface or both surfaces thereof, if necessary. Examples of the coating layer include a hard coat layer, an antireflection film layer, an anti-fog coating film layer, an antifouling layer, a water-repellent layer, a primer layer, and a photochromic layer. These coating layers may be used singly or a plurality of coating layers may be used in multilayers. In a case where coating layers are provided on the both surfaces, the same coating layer may be provided on each surface, or different coating layer may be provided on each surface.

In a case where the optical material of the present embodiment is applied to the spectacle lens, the polymerizable composition of the present embodiment may include a hard coat layer and/or an antireflection coating layer formed on at least one surface of an optical material (lens) obtained by curing the polymerizable composition of the present embodiment. The polymerizable composition of the present embodiment may include other layers described above. Since a lens formed of a specific polymerizable composition is used in the spectacle lens obtained in this manner, even in a case where the spectacle lenses are provided with such a coating layer, impact resistance is excellent.

The hard coat layer is a coating layer which is provided on at least one surface of an optical material (lens) obtained by curing the polymerizable composition of the present embodiment which has a purpose of providing the surface of the lens with a function such as scratch resistance, wear resistance, moisture resistance, hot water resistance, heat resistance, light fastness. The hard coat layer can be obtained from a composition containing one or more metal oxides selected from the group of elements of silicon, titanium, zirconium, tin, aluminum, tungsten, and antimony, and a silane compound having at least one functional group selected from an alkyl group, an allyl group, an alkoxy group, a methacryloxy group, an acryloxy group, an epoxy group, an amino group, an isocyanate group, and a mercapto group and a hydrolyzate thereof.

The hard coat composition may include a curing agent for the purpose of promoting curing. Specific examples of the curing agent include inorganic or organic acid, amine, a metal complex, organic acid metal salt, and metal chlorides. A solvent may be used for preparing the hard coat composition. Specific examples of the solvent include water, alcohols, ethers, ketones, and esters.

The hard coat layer is generally formed by applying the hard coat composition to the surface of the molded product by a well-known coating method such as spin coating and dip coating and curing the hard coat composition. Examples of the curing method include heat curing and a curing method by energy ray irradiation such as an ultraviolet ray or visible light. In a case where heat curing is performed, it is preferable that the heat curing is performed at 80°C to 120°C for 1 to 4 hours. In order to suppress the generation of interference fringes, it is preferable that the difference between refractive indexes of the hard coat layer and the molded product is within a range of ±0.1.

Before the hard coat layer is provided, it is preferable that the surface of the substrate is subjected to ultrasonic cleaning with an alkaline aqueous solution so as to satisfy Conditions (a) to (d) .
(a) An aqueous solution of sodium hydroxide or potassium hydroxide having an alkaline aqueous solution of 5% to 40%.
(b) The treatment temperature of the alkaline aqueous solution is 30°C to 60°C.
(c) The treatment time is 3 to 5 minutes.
(d) The frequency of the ultrasonic wave is 20 to 30 kHz.

After the surface of the substrate is washed with an alkaline aqueous solution, the surface of the molded product may be washed with distilled water or alcohols such as isopropanol and dried in the range of 50°C to 80°C for 5 minutes to 20 minutes.

The molded product obtained from the polymerizable composition of the present embodiment has excellent alkali resistance and occurrence of cloudiness and the like is suppressed even after washing with an alkaline aqueous solution.

The antireflection layer is a coating layer which is provided on at least one surface of a molded product (lens) which has a purpose of increasing transmittance by reducing a reflectance generated from the difference between refractive indexes of the air and the molded product and greatly reducing the reflection of light on the surface of the plastic lens. The antireflection layer according to the present embodiment includes a low refractive index film layer containing silicon oxide and a high refractive index film layer containing one or more kinds of metal oxides selected from titanium oxide, zirconium oxide, aluminum oxide, zinc oxide, cerium oxide, antimony oxide, tin oxide, and tantalum oxide, and each layer may be a single layer or may have a multilayer structure.

In a case where the antireflection layer has a multilayer structure, it is preferable that five to seven layers are laminated. The film thickness is preferably 100 to 300 nm and more preferably 150 to 250 nm. Examples of a method for forming the multilayer antireflection layer include a vacuum vapor deposition method, a sputtering method, an ion plating method, an ion beam assist method, and a CVD method.

An anti-fog coating layer, an antifouling layer, and a water repellent layer may be formed on the antireflection layer, if necessary. With respect to the method of forming an anti-fog coating layer, an antifouling layer, and a water repellent layer, as long as the method does not give an adverse effect on the antireflection function, the treatment method, the treatment material, and the like are not particularly limited. Well-known anti-fog coating treatment methods, antifouling treatment methods, water repellent treatment methods, and materials can be used. Examples of the anti-fog coating treatment method and the antifouling treatment method include a method of covering the surface with a surfactant, a method of adding a hydrophilic film to the surface so as to cause the surface to be water absorbent, a method of covering the surface with fine irregularities so as to increase water absorption, a method of causing the surface to be water absorbent by using photocatalytic activity, and a method of preventing adhesion of water droplets by applying a super water repellent treatment. Examples of the water repellent treatment method include a method of forming a water repellent treated layer by applying a fluorine-containing silane compound and the like by vapor deposition or sputtering and a method of dissolving a fluorine-containing silane compound in a solvent and performing coating to form a water repellent treated layer.

Each of these coating layers contains an ultraviolet absorbing agent for the purpose of protecting lenses or eyes from ultraviolet rays, an infrared absorbing agent for the purpose of protecting eyes from infrared rays, a light stabilizer and an antioxidant for the purpose of improving the weather fastness of the lens, and contain a dye, a pigment, a photochromic dye, and a photochromic pigment, for the purpose of improving the fashionability of the lens, an antistatic agent, and other well-known additives for enhancing the performance of the lens may be used in combination. With respect to the layer to be coated by application, various leveling agents for improving applicability may be used.

The optical material for using the polymerizable composition of the present embodiment may be dyed to be used for the purpose of providing fashionability or a photochromic performance by using a coloring matter depending on the purpose. Although the lens may be dyed by a well-known dyeing method, the dying is generally performed in the following method.

Generally, a method of immersing (dyeing step) a lens material for finishing a predetermined optical surface in a dyeing solution obtained by dissolving or uniformly dispersing a coloring matter to be used and heating the lens so as to fix the coloring matter (an annealing step after dyeing step), if necessary, is used. The coloring matter used in the dyeing step is not particularly limited as long as the coloring matter is a well-known coloring matter, but an oil soluble dye or a dispersed dye is generally used. The solvent used in the dyeing step is not particularly limited as long as the coloring matter used is soluble or uniformly dispersible. In this dyeing step, if necessary, a surfactant for dispersing the coloring matter in the dyeing solution or a carrier for promoting dyeing may be added.

In the dyeing step, a dye solution is prepared by dispersing a coloring matter and a surfactant to be added, if necessary, in water or a mixture of water and an organic solvent, the optical lens is immersed in the dyeing solution, and dyeing is performed at a predetermined temperature for a predetermined period of time. The dyeing temperature and time vary depending on the desired coloring concentration, but dyeing temperature and time may be about several minutes to several tens hours at lower than 120°C, and the dye concentration of the dyeing solution is 0.01 to 10 weight%. Further, in a case where the dyeing is difficult, the dyeing may be performed under pressure.

The post-dyeing annealing step, which is performed, if necessary, is a step of performing a heating treatment on the dyed lens material. In the heat treatment, after water remaining on the surface of the lens material dyed in the dyeing step is removed with a solvent or the like or dried by the air, for example, the lens is placed in a furnace such as an infrared heating furnace under the air atmosphere or a resistance heating furnace for a predetermined time. In the annealing step after dyeing, moisture permeated into the inside of the lens material is removed in a case of dyeing, as well as preventing the loss of the color of the dyed lens material (color escape prevention treatment). In the present embodiment, in a case where an alcohol compound is not contained, unevenness after dyeing is small.

### <Application>

Subsequently, the use of the optical material of the present embodiment is be described.

Examples of the optical material according to the present embodiment include various plastic lenses such as a plastic spectacle lens, goggles, a spectacle lens for vision correction, a lens for an imaging device, a Fresnel screen for a liquid crystal projector, a lenticular lens, and a contact lens, an antireflection film used for a sealing material for a light emitting diode (LED), an optical waveguide, an optical adhesive used for bonding an optical lens and an optical waveguide, an optical lens, or the like, transparent coating used for a liquid crystal display device member (a substrate, a light guide plate, a film, a sheet, or the like), a sheet and a film to be attached to a car windshield and a motorcycle helmet, or a transparent substrate.

In the above, the embodiments of the present invention are described, but the present invention is not limited to the embodiments described above, but various aspects can be applied without deteriorating from the effect of the present invention.

For example, in the present embodiment, the iso(thio)cyanate compound (A1) and the organic coloring matter (B) are preliminarily mixed to prepare the prepolymer, but an additive such as an ultraviolet absorbing agent and a catalyst may be mixed with the iso (thio) cyanate compound in advance, to prepare the prepolymer.

A portion of the active hydrogen compound (C) added in Step 3 can also be used in Step 1 or 2.

### Examples

Hereinafter, the present invention is specifically described with reference to the examples, but the present invention is not limited thereto.

First the evaluation method in the examples of the present invention is described below.

### <Evaluation method>

### • Light transmittance

As a measuring device, a UV-visible light spectrum (380 to 800 nm) was measured using Shimadzu spectrophotometer UV-1600 manufactured by Shimadzu Corporation and using a 2-mm thick plano lens.

### • Solubility test

The prepared master batch (mixed solution a) was heated from 20°C to 50°C and mixed and stirred, and properties such as viscosity were checked after a predetermined period of time. A case where the properties were changed was presented as X, and a case where the properties were not changed was presented as O. After a predetermined period of time, a portion was extracted and filtration was performed through a 1 µm PTFE filter, and then a portion on the filter was checked. A case where a compound remained on the filter was presented as X, and a case where a compound did not remain on the filter was presented as O. In both of the above two checking methods, a case in which both were O was evaluated as O, and any one or both were X was evaluated as X.

### [Manufacturing Example 1]

0.01 to 0.15 parts by weight of PD-311S (manufactured by Mitsui Chemicals, Inc.) was dissolved in 100 parts by weight of 2,5(6)-bis(isocyanatomethyl) bicyclo-[2.2.1]-heptane, was stirred at 20°C to 50°C for three hours, so as to prepare Master Batch (1).

Each of Master Batch (1) prepared was subjected to the above solubility test. Results thereof are as presented in Table 1.

### [Manufacturing Examples 2 to 6]

Master batches (2) to (6) were obtained in the same manner as in Manufacturing Example 1 except for changing 2,5(6)-bis(isocyanatomethyl) bicyclo-[2.2.1]-heptane to the respective compounds. Each of master batches prepared was subjected to the solubility test. Results thereof are as presented in Table 1.

The reference numerals presented in Table 1 correspond to the compound provided below.
A-1: 2,5(6)-bis (isocyanatomethyl)bicyclo-[2.2.1]-heptane
A-2: m-Xylylene diisocyanate
A-3: Bis(4-isocyanatocyclohexyl) methane
C-1: Pentaerythritol tetrakis(3-mercaptopropionate)
C-2: 4-Mercaptomethyl-1,8-dimercapto-3,6-dithiaoctane
C-3: A mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane

**[Table 1]**

| | | 100 ppm | 500 ppm | 1,000 ppm | 1,500 ppm |
|---|---|---|---|---|---|
| Manufacturing Example 1 | A-1 | O/1 hr | O/3 hr | O/3 hr | X/12 hr |
| Manufacturing Example 2 | A-2 | O/1 hr | O/3 hr | O/3 hr | X/12 hr |
| Manufacturing Example 3 | A-3 | O/1 hr | O/3 hr | O/3 hr | X/12 hr |
| Manufacturing Example 4 | C-1 | X/12 hr | - | - | - |
| Manufacturing Example 5 | C-2 | X/12 hr | - | - | - |
| Manufacturing Example 6 | C-3 | X/12 hr | - | - | - |

### [Example 1]

0.035 parts by weight of dibutyltin (II) dichloride, 0.1 parts by weight of ZelecUN manufactured by Stepan Company, 1.5 parts by weight of 2-(2H-benzotriazole-2-yl)-4-tert-octylphenol, 49.9 parts by weight of 2,5 (6) -bis (isocyanatomethyl) -bicyclo- [2.2.1] heptane, and 0.7 parts by weight of Master batch (1) (containing 1,000 ppm of an organic coloring matter) were introduced to prepare a mixed solution. This mixed solution was stirred at 25°C for one hour so as to be completely dissolved. Thereafter, 23.9 parts by weight of pentaerythritol tetrakis(3-mercaptopropionate) and 25.5 parts by weight of 4-mercaptomethyl-1,8-dimercapto-3,6-dithiaoctane were introduced and were stirred at 25°C for 30 minutes so as to obtain a homogeneous solution. This solution was defoamed at 600 Pa for one hour, was filtrated through a 1 µm PTFE filter, and was introduced to a glass mold for plano of 2C having a center thickness of 2 mm and a diameter of 80 mm. The temperature of this glass mold was increased from 25°C to 120°C for 16 hours. Cooling was performed to room temperature and the resultant was removed from the glass mold to obtain a plano lens. The obtained plano lens was further annealed at 120°C for two hours.

As a result of measuring the light transmittance of the molded product subjected to this annealing treatment, the light transmittance at a wavelength of 440 nm was 83.9%, the light transmittance at 420 nm was 13.0%, the light transmittance at 410 nm was 0.1%, and the light transmittance at 590 nm was 42.4%.

The spectrum charts obtained in Example 1 and Examples 2 and 3 described below are provided in FIG. 1.

### [Example 2]

0.01 parts by weight of dibutyltin (II) dichloride, 0.1 parts by weight of ZelecUN manufactured by Stepan Company, 1.5 parts by weight of 2-(2H-benzotriazole-2-yl)-4-tert-octylphenol, 49.9 parts by weight of m-xylylene diisocyanate, and 0.7 parts by weight of Master batch (2) (containing 1,000 ppm of an organic coloring matter) were introduced to prepare a mixed solution. This mixed solution was stirred at 25°C for one hour so as to be completely dissolved. Thereafter, 49.4 parts by weight of a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane was introduced to this prepared solution, and this was stirred at 25°C for 30 minutes, to obtain a homogeneous solution.

This solution was defoamed at 600 Pa for one hour, was filtrated through a 1 µm PTFE filter, and was introduced to a glass mold for plano of 2C having a center thickness of 2 mm and a diameter of 80 mm. The temperature of this glass mold was increased from 25°C to 120°C for 16 hours. Cooling was performed to room temperature and the resultant was removed from the glass mold to obtain a plano lens. The obtained plano lens was further annealed at 120°C for two hours.

As a result of measuring the light transmittance of the molded product subjected to this annealing treatment, the light transmittance at a wavelength of 440 nm was 82.1%, the light transmittance at 420 nm was 17.2%, the light transmittance at 410 nm was 0.1%, and the light transmittance at 590 nm was 45.4%.

### [Example 3]

0.15 parts by weight of dibutyltin (II) dichloride, 0.1 parts by weight of ZelecUN (manufactured by STEPAN Company), 0.64 parts by weight of 2-(2-hydroxy-3-t-butyl-5-methylphenyl)-chlorobenzotriazole (TINUVIN 326 manufactured by BASF SE), 1.5 parts by weight of a mixture of octyl 3-[3-tert-butyl-5- (5-chloro-2H-benzotriazole-2-yl) -4-hydroxyphenyl] propionate and 2-ethylhexyl 3-[3-tert-butyl-5-(5-chloro-2H-benzotriazole-2-yl)-4-hydroxyphen yl] propionate (EVERSORB 109 manufactured by Everlight Chemical Industrial Corp.), 58.2 parts by weight of bis(4-isocyanatocyclohexyl) methane, and 0.7 parts by weight of Master batch (3) (containing organic coloring matter at 1,000 ppm) were mixed under stirring at 25°C for one hour, so as to obtain a homogeneous solution. 41.1 parts by weight of a mixture of 5,7-dimercaptomethyl-1,11-dimercapto-3,6,9-trithiaundecane, 4,7-dimercaptomethyl-1,11-dimercapto-3,6,9-trithiaundecane, and 4,8-dimercaptomethyl-1,11-dimercapto-3,6,9-trithiaundecane was added to this homogeneous solution and was mixed under stirring at 25°C for 30 minutes, so as to obtain a mixed solution.

This mixed solution was defoamed at 600 Pa for one hour, was filtrated through a 1 µm PTFE filter, and was introduced to a glass mold for plano of 2C having a center thickness of 2 mm and a diameter of 80 mm. The temperature of this glass mold was increased from 25°C to 140°C over 24 hours. Cooling was performed to room temperature and the resultant was removed from the glass mold to obtain a plano lens. The obtained plano lens was further annealed at 140°C for two hours.

As a result of measuring the light transmittance of this molded product subjected to the annealing treatment, the light transmittance at a wavelength of 440 nm was 84.6%, the light transmittance at 420 nm was 14.4%, the light transmittance at 410 nm was 0.1%, and the light transmittance at 590 nm was 43.9%.

### [Comparative Example 1]

0.001 parts by weight of PD-311S (manufactured by Mitsui Chemicals, Inc.) and 50.6 parts by weight of 2,5(6)-bis(isocyanatomethyl) bicyclo-[2.2.1]-heptane were mixed and stirred at 25°C for 30 minutes, so as to prepare a master batch in which PD-311S was completely dissolved.

Subsequently, 23.9 parts by weight of pentaerythritol tetrakis(3-mercaptopropionate), 25.5 parts by weight of 4-mercaptomethyl-1,8-dimercapto-3,6-dithiaoctane, a master batch, 0.02 parts by weight of dibutyltin (II) dichloride, 0.138 parts by weight of ZelecUN manufactured by STEPAN Company, and 1.5 parts by weight of 2-(2H-benzotriazole-2-yl)-4-tert-octylphenol were mixed. This mixed solution was stirred at 25°C. A stirring time of three hours was required to completely dissolve the solid component in this mixed solution.

### [Comparative Example 2]

In [Comparative Example 1], a mixed solution was prepared in the same manner as in [Comparative Example 1], except for changing 1.5 parts by weight of 2-(2H-benzotriazole-2-yl)-4-tert-octylphenol to 1.0 part by weight of 2-(5-chloro-2H-benzotriazole-2-yl)-4-methyl-6-tert-butylphenol. This mixed solution was stirred at 25°C for three hours, but it was visually checked that a solid component which is not dissolved in the mixed solution exists.

As described in the comparative example, in a case where the organic coloring matter was not dissolved in a portion of the isocyanate compound and the ultraviolet absorbing agent was not dissolved in the remaining isocyanate compound, a solid component is checked in the mixed solution, or a long period of time was required for complete dissolution. That is, according to the method of the composition in the comparative example, it was assumed that the effect of the additive component was not able to be exhibited, and there was a problem in the productivity of an optical material.

On the other hand, in the examples, a portion of the isocyanate compound and an organic coloring matter were mixed in advance to prepare a mixed solution (master batch), the remaining isocyanate compound and the ultraviolet absorbing agent were mixed and dissolved, and thus the organic coloring matter and the ultraviolet absorbing agent was able to be sufficiently dissolved in the polymerizable composition. Therefore, the polymerizable composition obtained from the manufacturing method of the example was able to obtain an optical material having an excellent effect of shielding blue light and an excellent balance between antiglare performances and visibility (contrast performance).

This application claims priority based on Japanese Patent Application No. 2015-183425 filed on September 16, 2015

## Claims

1. A method of manufacturing a polymerizable composition for an optical material, comprising:
a step of mixing an iso (thio) cyanate compound (A1) and an organic coloring matter (B) to obtain a mixed solution a;
a step of mixing the mixed solution a, an ultraviolet absorbing agent (D), and an iso(thio)cyanate compound (A2) which is identical to or different from the iso(thio)cyanate compound (A1) to obtain a mixed solution b; and
a step of mixing the mixed solution b and an active hydrogen compound (C),
wherein the organic coloring matter (B) is a tetraazaporphyrin compound represented by Formula (la): 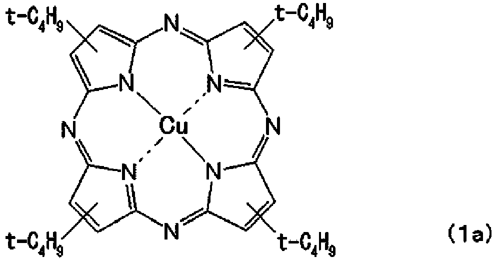 where Cu represents divalent copper, t-C₄H₉ represents a tertiary-butyl group.

2. The method of manufacturing a polymerizable composition for an optical material according to claim 1,
wherein the active hydrogen compound (C) is a polythiol compound.

3. The method of manufacturing a polymerizable composition for an optical material according to claim 2,
wherein the polythiol compound includes one or more compounds selected from the group consisting of pentaerythritol tetrakis(2-mercaptoacetate), pentaerythritol tetrakis(3-mercaptopropionate), bis(2-mercaptoethyl) sulfide, 4-mercaptomethyl-1,8-dimercapto-3,6-dithiaoctane, 5,7-dimercaptomethyl-1,11-dimercapto-3,6,9-trithiaundecane, 4,7-dimercaptomethyl-1,11-dimercapto-3,6,9-trithiaundecane, 4,8-dimercaptomethyl-1,11-dimercapto-3,6,9-trithiaundecane, 2,5-dimercaptomethyl-1,4-dithiane, 1,1,3,3-tetrakis(mercaptomethylthio) propane, 4,6-bis(mercaptomethylthio)-1,3-dithiane, 2-(2,2-bis(mercaptomethylthio)ethyl)-1,3-dithietane, and ethylene glycol bis(3-mercaptopropionate).

4. The method of manufacturing a polymerizable composition for an optical material according to any one of claims 1 to 3,
wherein the iso(thio)cyanate compound (A1) or the iso (thio) cyanate compound (A2) includes a compound selected from the group consisting of an aliphatic polyisocyanate compound, an alicyclic polyisocyanate compound, an aromatic polyisocyanate compound, a heterocyclic polyisocyanate compound, an aliphatic polyisothiocyanate compound, an alicyclic polyisothiocyanate compound, an aromatic polyisothiocyanate compound, and a sulfur-containing heterocyclic polyisothiocyanate compound or derivatives thereof.

5. The method of manufacturing a polymerizable composition for an optical material according to any one of claims 1 to 4,
wherein the ultraviolet absorbing agent (D) includes one or more compounds selected from the group consisting of a benzophenone-based compound, a triazine-based compound, and a benzotriazole-based compound.

6. A method of manufacturing an optical material, comprising:
a step of heating and curing a polymerizable composition for an optical material obtained by the manufacturing method according to any one of claims 1 to 5.

## Patentansprüche

1. Verfahren zur Herstellung einer polymerisierbaren Zusammensetzung für ein optisches Material, das Folgendes umfasst:
einen Schritt des Vermischens einer Iso(thio)cyanat-Verbindung (A1) und eines organischen Farbstoffs (B), um eine gemischte Lösung a zu erhalten;
einen Schritt des Vermischens der gemischten Lösung a mit einem Ultraviolett-Absorptionsmittel (D) und einer Iso(thio)cyanat-Verbindung (A2), die mit der Iso(thio)cyanat-Verbindung (A1) identisch oder eine andere ist, um eine gemischte Lösung b zu erhalten; und
einen Schritt des Vermischens der gemischten Lösung b mit einer aktiven Wasserstoff-Verbindung (C);
wobei der organische Farbstoff (B) eine Tetraazaporphyrin-Verbindung der Formel (1a) ist: 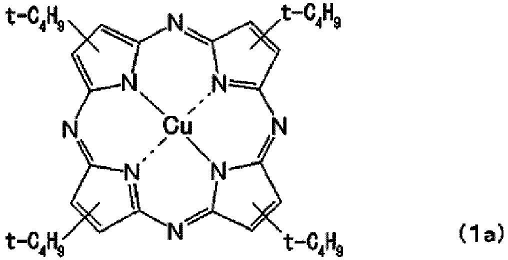 worin Cu für zweiwertiges Kupfer steht und t-C₄H₉ für eine tert-Butylgruppe steht.

2. Verfahren zur Herstellung einer polymerisierbaren Zusammensetzung für ein optisches Material nach Anspruch 1,
wobei die aktive Wasserstoff-Verbindung (C) eine Polythiol-Verbindung ist.

3. Verfahren zur Herstellung einer polymerisierbaren Zusammensetzung für ein optisches Material nach Anspruch 2,
wobei die Polythiol-Verbindung eine oder mehrere Verbindungen umfasst, die aus der aus Pentaerythrit-tetrakis(2-mercaptoacetat), Pentaerythrit-tetrakis(3-mercaptopropionat), Bis(2-mercaptoethyl)sulfid, 4-Mercaptomethyl-1,8-dimercapto-3,6-dithiaoctan, 5,7-Dimercaptomethyl-1,11-dimercapto-3,6,9-trithiaundecan, 4,7-Dimercaptomethyl-1,11-dimercapto-3,6,9-trithiaundecan, 4,8-Dimercaptomethyl-1,11 -dimercapto-3,6,9-trithiaundecan, 2,5-Dimercaptomethyl-1,4-dithian, 1,1,3,3-Tetrakis(mercaptomethylthio)propan, 4,6-Bis(mercaptomethylthio)-1,3-dithian, 2-(2,2-Bis(mercaptomethylthio)ethyl)-1,3-dithietan und Ethylenglykol-bis(3-mercaptopropionat) bestehenden Gruppe ausgewählt sind.

4. Verfahren zur Herstellung einer polymerisierbaren Zusammensetzung für ein optisches Material nach einem der Ansprüche 1 bis 3,
wobei die Iso(thio)cyanat-Verbindung (A1) oder die Iso(thio)cyanat-Verbindung (A2) eine Verbindung umfasst, die aus der aus einer aliphatischen Polyisocyanat-Verbindung, einer alizyklischen Polyisocyanat-Verbindung, einer aromatischen Polyisocyanatverbidung, einer heterozyklischen Polyisocyanat-Verbindung, einer aliphatischen Polyisothiocyanat-Verbindung, einer alizyklischen Polyisothiocyanat-Verbindung, einer aromatischen Polyisothiocyanat-Verbindung und einer schwefelhältigen heterozyklischen Polyisothiocyanat-Verbindung sowie Derivaten davon bestehenden Gruppe ausgewählt ist.

5. Verfahren zur Herstellung einer polymerisierbaren Zusammensetzung für ein optisches Material nach einem der Ansprüche 1 bis 4,
wobei das Ultraviolett-Absorptionsmittel (D) eine oder mehrere Verbindungen umfasst, die aus der aus einer Verbindung auf Benzophenon-Basis, einer Verbindung auf Triazin-Basis und einer Verbindung auf Benzotriazol-Basis bestehenden Gruppe ausgewählt sind.

6. Verfahren zur Herstellung eines optischen Materials, das Folgendes umfasst:
einen Schritt des Erhitzens und Härtens einer polymerisierbaren Zusammensetzung für ein optisches Material, das durch ein Herstellungsverfahren nach einem der Ansprüche 1 bis 5 erhalten wurde.

## Revendications

1. Procédé de fabrication d'une composition polymérisable pour un matériau optique, comprenant :
une étape de mélange d'un composé iso(thio)cyanate (A1) et d'une matière colorante organique (B) pour obtenir une solution mélangée a ;
une étape de mélange de la solution mélangée a, d'un agent absorbant les ultraviolets (D) et d'un composé iso(thio)cyanate (A2) qui est identique au ou différent du composé iso(thio)cyanate (A1) pour obtenir une solution mélangée b ; et
une étape de mélange de la solution mélangée b et d'un composé à base d'hydrogène actif (C),
dans lequel la matière colorante organique (B) est un composé tétraazaporphyrine représenté par la formule (la) : 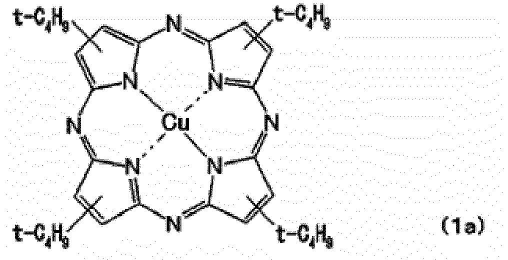 où Cu représente du cuivre divalent, t-C₄H₉ représente un groupe butyle tertiaire.

2. Procédé de fabrication d'une composition polymérisable pour un matériau optique selon la revendication 1,
dans lequel le composé à base d'hydrogène actif (C) est un composé polythiol.

3. Procédé de fabrication d'une composition polymérisable pour un matériau optique selon la revendication 2,
dans lequel le composé polythiol comprend un ou plusieurs composés choisis dans le groupe constitué par le tétrakis(2-mercaptoacétate) de pentaérythritol, le tétrakis(3-mercaptopropionate) de pentaérythritol, le bis(2-mercaptoéthyl)sulfure, le 4-mercaptométhyl-1,8-dimercapto-3,6-dithiaoctane, le 5,7-dimercaptométhyl-1,11-dimercapto-3,6,9-trithiaundécane, le 4,7-dimercaptométhyl-1,11-dimercapto-3,6,9-trithiaundécane, le 4,8-dimercaptométhyl-1,11-dimercapto-3,6,9-trithiaundécane, le 2,5-dimercaptométhyl-1,4-dithiane, le 1,1,3,3-tétrakis(mercaptométhylthio)propane, le 4,6-bis(mercaptométhylthio)-1,3-dithiane, le 2-(2,2-bis(mercaptométhylthio)éthyl)-1,3-dithiétane et le bis(3-mercaptopropionate) d'éthylène glycol.

4. Procédé de fabrication d'une composition polymérisable pour un matériau optique selon l'une quelconque des revendications 1 à 3,
dans lequel le composé iso(thio)cyanate (A1) ou le composé iso(thio)cyanate (A2) comprend un composé choisi dans le groupe constitué par un composé polyisocyanate aliphatique, un composé polyisocyanate alicyclique, un composé polyisocyanate aromatique, un composé polyisocyanate hétérocyclique, un composé polyisothiocyanate aliphatique, un composé polyisothiocyanate alicyclique, un composé polyisothiocyanate aromatique et un composé polyisothiocyanate hétérocyclique contenant du soufre ou des dérivés de ceux-ci.

5. Procédé de fabrication d'une composition polymérisable pour un matériau optique selon l'une quelconque des revendications 1 à 4,
dans lequel l'agent absorbant les ultraviolets (D) comprend un ou plusieurs composés choisis dans le groupe constitué par un composé à base de benzophénone, un composé à base de triazine et un composé à base de benzotriazole.

6. Procédé de fabrication d'un matériau optique, comprenant :
une étape de chauffage et de durcissement d'une composition polymérisable pour un matériau optique obtenu par le procédé de fabrication selon l'une quelconque des revendications 1 à 5.
